(19) Europäisches Patentamt
European Patent Office
Office européen des brevets

(11) **EP 1 808 775 A2**

(12) **EUROPEAN PATENT APPLICATION**

(43) Date of publication:
**18.07.2007 Bulletin 2007/29**

(51) Int Cl.:
***G06F 17/13*** *(2006.01)*

(21) Application number: **06027001.4**

(22) Date of filing: **28.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.01.2006 JP 2006008057**

(71) Applicant: **MITSUBISHI HEAVY INDUSTRIES, LTD.**
**Tokyo 100-8315 (JP)**

(72) Inventors:
• **Sato, Nobuaki c/o YOKOHAMA**
**Dockyard&Mach.Works**
**Yokohama-shi,**
**Kanagawa-ken (JP)**
• **Ito, Kuninori c/o MHI Solution Technologies Co, Ltd**
**Hiroshima,**
**Hiroshima-ken (JP)**
• **Kosuge, Kenichi c/o Kobe Mat. Testing L. Co. Ltd.**
**Kako-gun**
**Hyogo (JP)**

(74) Representative: **HOFFMANN EITLE**
**Patent- und Rechtsanwälte**
**Arabellastrasse 4**
**81925 München (DE)**

(54) **Design aiding apparatus and computer program**

(57)     Disclosed is a design aiding computer program which obtains an algebraic expression of an equation with an unknown function, visualizes a partial space ("reasonable area") in which a boundary condition or so is permitted, and acquires a point in the reasonable area which minimizes an approximate error as a solution of the equation. The computer program includes a first procedure of inputting an unknown function u, an initial condition and a boundary condition, a second procedure of approximating the unknown function u by linear combination of an orthonomal basis, a third procedure of generating an algebraic expression having a linear combination constant included in the linear combination as a root, a fourth procedure of expressing the initial condition and the boundary condition with the orthonomal bases to acquire at least one restriction condition, a fifth procedure of acquiring a root of the algebraic expression under the at least one restriction condition, and a sixth procedure of determining whether or not the root minimizes the error of the algebraic expression, wherein the root is taken as a solution of the equation when it is determined that the error is a minimum, and the computer program returns to the fifth procedure when it is determined that the error is not a minimum.

FIG.1

**Description**

BACKGROUND OF THE INVENTION

Field of the Invention

The present invention relates to a design aiding apparatus, and, more particularly, to a design aiding apparatus that acquires an approximate solution of a partial differential equation, an integral equation, an equation expressed by a recurrence formula map operator, or a non-linear equation, which involves a complex boundary condition and initial condition.

Description of the Related Art

Conventionally, problems which are expressed by a partial differential equation, an integral equation, and a variational principle as governing equations in a three-dimensional physical space involving complex boundary conditions and initial conditions have been analyzed by an electronic computer based on the FDM (Finite Difference Method), an FEM (Finite Element Method), BEM (Boundary Element Method), Rayleight-Ritz method, weighted residual method and Green's function method. Specifically, governing equations which come into question in aiding of diverse designs cover all engineering cases, such as a basic equation of elasticity (large deflection or deformation structural problem), a parabolic partial differential equation (diffusion of heat and materials), an Euler's equation (potential flow), a Navier-Stokes equation (non-linear partial differential equation, incompressible and compressible flows, chemical reaction analysis, combustion analysis), a wave equation, a control technology, and an optimization (maximization and minimization of an objective function).

When a coefficient in a partial differential term becomes a function of an argument (when a governing equation is semi-linearized or quasi-linearlized), such a problem is difficult to handle even based on the FEM and BEM.

When a governing equation is non-linear, an existence and uniqueness of a solution often become unclear or the convergence of a solution might not be often guaranteed. When a Reynolds number is large in a fluid equation or when a boundary shape and a boundary condition are not simple, for example, no convergence of a solution is often obtained.

In the fields of controlling and optimization, sophisticated analysis can have been attained for stable analysis of a solution, a von der Pol's equation, a Mathieu equation, chaos, attractor, limit cycle, and so forth. This analysis has not however accomplished the confinement of a characteristic root in a desired area or free designing of the locus of a limit cycle; such a locus is still drawn on the trial and error basis. While a recurrence formula map operator equation has been studied based on the concept of a Poincare cross section and a chaotic behavior becomes active, a fixed point (which may also be called steady point), $U\pi$, which is an ultimate convergence point of a recurrence formula $U_{k+1}=f(U_k)$, is often unobtainable due to its chaotic behavior. (The invention provides foresight in acquiring a solution of a recurrence formula map operator even regardless of whether the solution is a stable fixed point or an unstable fixed point.)

For example, the theory of Routh-Hurwitz stability criterion expresses the characteristic of a control system in the form of an algebraic expression, and the Routh-Hurwitz stability criterion expresses the real number portions of all roots of an algebraic expression in the left-half plane. This stability criterion provides a plurality of restriction conditions where coefficient terms $A_1$ to $A_{n-1}$ from the (n-1)-th order of an n-th order algebraic expression or lower to the 0-th order are satisfied, and is equivalent to limiting an area in the n-th order space where the restriction conditions are fulfilled. However, a restriction area which is limited by the restriction condition is not itself expressed, and emphasis is entirely put on the determination as to whether or not the control system is stable.

In the "A Multi-cylinder Internal Combustion Engine, and Crank Arrangement Determination Method of the Crankshaft" disclosed in Japanese Patent Laid-Open Publication No. 2005-9323 (hereinafter referred to as "Patent Document 1"), n-th order vector space is introduced in the scheme of disposing (n+1) cranks on the crankshaft non-equiangularly to make the unbalanced force to zero and a restriction area (hereinafter called "reasonable area" as done in Patent Document 1) is visualized to facilitate a solution. Specifically, a crank angle $\theta_i$ (where i being 0 to n) is expressed by $z=\exp(j\theta_i)$ as a point z on a unit circle with a reference crank angle being 0°. Then, the entire crank angle becomes a vector V having z of (n+1) components. Further, it was found that one of the restriction conditions of making the unbalanced force zero would be that the inner product of a unit vector I and the crank angle vector V would be expressed as 0. The component of the vector V lying on a unit circle is also one restriction condition. As the scheme disclosed in Patent Document 1 makes it possible to draw the geometric shape of a "reasonable area" this way, and predicts that a solution to be obtained lies, for example, at a valley bottom point of the reasonable area, the scheme is one of powerful general solutions to non-linear optimization.

While the invention described in Patent Document 1 can handle first-order or second-order unbalanced force and high-order X type vibratory force with respect to the crankshaft of an internal combustion engine, objects to be handled are limited. Generally speaking, therefore, the disclosed invention cannot cope with optimization of balancing of a mechanical structure, and the internal moment of the crankshaft and suppression of torsional vibration thereof.

In addition, the invention described in Patent Document 1 can merely expand a cyclotomic equation and handle problems where roots of an objective function (function to be minimized) lie at unequal angular positions.

SUMMARY OF THE INVENTION

Accordingly, it is an object of the invention to provide a concrete scheme of algebraically expressing a governing equation, such as a partial differential equation, an integral equation, a recurrence formula, a non-linear equation, a variational principle, a control theory or an optimization problem, in a three-dimensional physical space involving complex boundary conditions and initial conditions into an algebraic expression to introduce a high-order vector space, visualizing a partial space ("reasonable area") in which a restriction condition expressed by a vector component is permitted, and acquiring a point in the reasonable area which minimizes an approximate error as a solution of the equation.

To achieve the object, according to a first aspect of the invention, there is provided a design aiding apparatus for acquiring a solution of an equation with an unknown function u, which comprises: an equation input unit which inputs the equation and an initial condition and/or a boundary condition thereof, or a restriction condition involved in the equation; an approximate order input unit which inputs the unknown function u when the unknown function u is approximated by linear combination of an orthonomal basis of the finite number n; a CPU which computes an error in the equation caused by approximation and expressed by a max norm, 1-norm, 2-norm, Minkowski norm, Holder norm or a norm satisfying an axiom of a distance; a reasonable area display unit which displays an area of real space of an (n-m)-th order where m is a number of combination coefficients of the linear combination associated with one another by the initial condition and/or the boundary condition; and a solution output unit which outputs the solution of the equation, wherein with an arbitrary point in the reasonable area being a candidate point, the error at the candidate point is calculated, the error at another candidate point is calculated, and a point in the reasonable area which minimizes the error is acquired as a solution.

According to the design aiding apparatus of the first aspect of the invention, an unknown function is expanded with an orthonomal basis to thereby enable minimization of an error caused in the equation.

In the design aiding apparatus of the first aspect, the equation is $Du=C$ where D is a differential operator, an integral operator, a recurrence formula map operator, or a non-linear operator in a non-linear equation, C is a constant, and u is an unknown function, and the norm $\|Du-C\|$ which is the error is calculated using $Du=C$ after the u is approximated by the linear combination and the whole equation is algebraically expressed.

This design aiding apparatus can verify an accuracy of a solution using an error in the equation after algebraically expressing the equation.

In the design aiding apparatus of the first aspect, the reasonable area display unit presents at least a two-dimensional graphic display when the reasonable area is two-dimensional or less, presents a three-dimensional graphic display or displays a plurality of graphs hierarchized into a two-dimensional area when the reasonable area is three-dimensional or greater, and presents a three-dimensional graphic display or displays a three-dimensional graph or a contour map hierarchized into a two-dimensional area when a curved surface of the reasonable area is three-dimensional or greater.

This design aiding apparatus can allow acquisition of a solution to progress while realistically paying attention to a valley bottom or top of a reasonable area.

In the design aiding apparatus of the first aspect, in an algebraic expression which has a coefficient bi (i being 1 to n) of the linear combination as a root, the CPU limits every root to a real number, or limits every root to one located in a partial area within a complex plane when the root is paired conjugate roots.

This design aiding apparatus can narrow the value of the linear combination coefficient.

According to a second aspect of the invention, there is provided a computer program that allows a computer to function as an equation input unit which inputs an equation with an unknown function u and an initial condition and/or a boundary condition thereof; an approximate order input unit which inputs the unknown function u when the unknown function u is approximated by linear combination of an orthonomal basis of the finite number n; a CPU which computes an error in the equation caused by approximation and expressed by a max norm, 1-norm, 2-norm, Minkowski norm, Holder norm or a norm satisfying an axiom of a distance; a reasonable area display unit which displays an area of a real space of an (n-m)-th order where m is a number of combination coefficients of the linear combination associated with one another by the initial condition and/or the boundary condition; and a solution output unit which outputs the solution of the equation, wherein with an arbitrary point in the reasonable area being a candidate point, the error at the candidate point is calculated, the error at another candidate point is calculated, and a point in the reasonable area which minimizes the error is acquired as a solution.

According to the computer program of the second aspect of the invention, an unknown function is expanded with an orthonomal basis to enable minimization of an error caused in the equation.

In the computer program of the second aspect, the equation is $Du=C$, where $D$ is a differential operator, an integral operator, a recurrence formula map operator, or a non-linear operator in a non-linear equation, $C$ is a constant, and $u$ is an unknown function, and the norm $\|Du-C\|$ which is the error is calculated using $Du=C$ after the $u$ is approximated by the linear combination and the whole equation is algebraically expressed.

This computer program can verify an accuracy of a solution using an error in the equation after algebraically expressing the equation.

In the computer program of the second aspect, the reasonable area display unit presents at least a two-dimensional graphic display when the reasonable area is two-dimensional or less, presents a three-dimensional graphic display or displays a plurality of graphs hierarchized into a two-dimensional area when the reasonable area is three-dimensional or greater, and presents a three-dimensional graphic display or displays a three-dimensional graph or a contour map hierarchized into a two-dimensional area when a curved surface of the reasonable area is three-dimensional or greater.

This computer program can allow acquisition of a solution to progress while realistically paying attention to a valley bottom or top of a reasonable area.

In the computer program of the second aspect, in an algebraic expression which has a coefficient $b_i$ ($i$ being 1 to $n$) of the linear combination as a root, the CPU limits every root to a real number, or limits every root to one located in a partial area within a complex plane when the root is paired conjugate roots.

This computer program can achieve narrowing down of the value of the linear combination coefficient.

The computer program of the second aspect includes a first procedure of inputting an unknown function $u$, an initial condition and a boundary condition; a second procedure of separating variables from the unknown function $u$ and approximating functions of the variables by linear combination of respective different orthonomal bases; a third procedure of expressing the equation with the orthonomal bases and generating an algebraic expression having a linear combination constant included in the expression of the equation as a root; a fourth procedure of expressing the initial condition and the boundary condition with the orthonomal bases to acquire at least one restriction condition; a fifth procedure of acquiring a root of the algebraic expression under the at least one restriction condition; and a sixth procedure of determining whether or not the root minimizes the error of the algebraic expression, wherein the root is taken as a solution of the equation when it is determined that the error is a minimum, and the computer program returns to the fifth procedure when it is determined that the error is not a minimum.

This computer program can easily solve an equation which requires variable separation.

The computer program of the second aspect includes a first procedure of inputting an unknown function $u$, an initial condition and a boundary condition; a second procedure of approximating the unknown function $u$ by linear combination of an orthonomal basis; a third procedure of performing definite integral of the equation and generating an algebraic expression having a linear combination constant included in the definite integral as a root; a fourth procedure of expressing the initial condition and the boundary condition with the orthonomal bases to acquire at least one restriction condition; a fifth procedure of acquiring a root of the algebraic expression under the at least one restriction condition; and a sixth procedure of determining whether or not the root minimizes the error of the algebraic expression, wherein the root is taken as a solution of the equation when it is determined that the error is a minimum, and the computer program returns to the fifth procedure when it is determined that the error is not a minimum.

This computer program can easily solve an equation which requires definite integral.

The computer program of the second aspect includes a first procedure of inputting an unknown function $u$, an initial condition and a boundary condition; a second procedure of approximating the unknown function $u$ by linear combination of an orthonomal basis; a third procedure of generating an algebraic expression having a linear combination constant included in the linear combination as a root; a fourth procedure of expressing the initial condition and the boundary condition with the orthonomal bases to acquire at least one restriction condition; a fifth procedure of acquiring a root of the algebraic expression under the at least one restriction condition; and a sixth procedure of determining whether or not the root minimizes the error of the algebraic expression, wherein the root is taken as a solution of the equation when it is determined that the error is a minimum, and the computer program returns to the fifth procedure when it is determined that the error is not a minimum.

This computer program can easily solve an equation which requires neither variable separation nor definite integral.

The invention can provide a concrete scheme of algebraically expressing a governing equation, such as a partial differential equation, an integral equation, a recurrence formula, a non-linear equation, a variational principle, a control theory or an optimization problem, in a three-dimensional physical space involving complex boundary conditions and initial conditions to introduce a high-order vector space, visualizing a partial space ("reasonable area") in which a restriction condition expressed by a vector component is permitted, and acquiring a point in the reasonable area which minimizes an error caused by approximation as a solution of the equation.

Particularly, according to the invention, unlike the conventional schemes, a boundary condition is not treated as an accompaniment of an equation, but an equation as well as a boundary condition is algebraically expressed, so that both the equation and boundary condition are equally treated. The reasonable area of a solution of an equation algebraically expressed and the curved surface of a solution can be easily visualized by three-dimensional display, thus providing excellent prospect for acquiring a solution.

Before beginning with the description of embodiments of the invention, an explanation of the mathematical principle of the invention will be provided below.

[Mathematical Principle of the Invention]

An equation on an unknown function f, which includes independent variables or arguments (x, y, z, t) and differential operators thereof, e.g., a Navier-Stokes equation, while a density $\rho$ and pressure p are scalar quantities, a velocity (u, v, w) is a vector quantity. A functional equation which uses vectors in an unknown function and an argument and includes differential and integral operators is satisfied in an area Q of an argument space, and a restriction condition (initial condition, boundary condition) is given in a boundary $\Gamma$ of the area Q. When a boundary condition becomes complicated, however, it is difficult to analytically solve a functional equation. One approach to the difficulty is to approximately solve a functional equation. The invention relates to an apparatus and a computer program which realize the approach.

Let us consider expansion of an unknown function f(x) with a functional basis in the invention. Specifically, for the sake of simplifying calculation, an unknown function f(x) is approximated by linear combination using a finite number of orthonomal bases ONB(x). For ONB(x), a Fourier series, Legendre polynomial, Laguerre's polynomial, Hermite polynomial, etc. are selectively available.

In this case, even when an equation includes differential and integral operators, the result of calculus should be expressed by a set of the same ONB(x). Even when a differential of higher order, double integrals, triple integrals or so are executed, therefore, the result would always be linear combination of the same ONB(x). As an equation including a restriction condition is algebraically expressed, this approach is suitable to obtain an approximate solution using a computer.

Given that the number of ONB(x) is n and the number of linear combination coefficients associated with one another by a restriction condition (initial condition, boundary condition) is m, an equation is satisfied in an area in an (n-m)-th order real space. The area Q in the (n-m)-th order real space is called "reasonable area".

For ONB(x) of an unknown function to have a significance, all the roots of an algebraic expression (t-b1) (t-b2) ... (t-bn) should be real. As m linear combination coefficients are associated with one another by the restriction condition (initial condition, boundary condition), the real roots of (n-m) should be acquired for the algebraic expression. An algebraic expression being solvable means that the original functional equation can be solved. As an algebraic expression is based on expansion of ONB(x) of an unknown equation f(x), however, an accuracy of the solution may not be guaranteed.

One way to cope with this problem is to minimize an error in an equation caused by approximation in a reasonable area. For an equation Du=C where D is a differential operator, C is a constant, and u is an unknown function, an error in the equation is (Du-C) and Du is a complete algebraic expression obtained by expanding u with an orthonomal basis. In the invention, let us consider to minimize a square error, not a simple error. In other words, a point in the (n-m)-th order real space which is a set of linear combination coefficients to minimize a square error is a solution to be obtained. A square error is not restrictive, and a higher-order error may be minimized. Therefore, a criterion to be verified the accuracy of a solution can be selected from multiple criteria. Hereinafter, therefore, acquisition of a solution in the invention may be expressed as "acquisition of a solution to minimize an objective function L in the (n-m)-th order real space". The objective function L can be a square error in some cases.

BRIEF DESCRIPTION OF THE DRAWINGS

FIG. 1 is a block diagram of a design aiding apparatus of the invention;
FIG. 2 is a flowchart for explaining the operation of the design aiding apparatus;
FIG. 3 shows a Poisson equation in a first embodiment;
FIG. 4 is a flowchart for acquiring a solution of the first embodiment (Poisson equation);
FIG. 5 is a flowchart for acquiring a solution according to a second embodiment (non-linear differential equation of second order);
FIG. 6 is a flowchart for acquiring a solution according to a third embodiment (Mathieu equation);
FIG. 7 is a flowchart for acquiring a solution according to a fourth embodiment (Hill equation);
FIG. 8 is a flowchart for acquiring a solution according to a fifth embodiment (integral problem);
FIG. 9 is a flowchart for acquiring a solution according to a sixth embodiment (initial value problem);

FIG. 10 is a conceptual diagram of generation of an attractor in the first embodiment; and

FIG. 11 is a flowchart for acquiring a solution of the first embodiment (attractor).

## DETAILED DESCRIPTION OF THE PREFERRED EMBODIMENTS

Preferred embodiments of the invention will be described below with reference to the accompanying drawings. While the sizes, materials, shapes, relative layouts of components of the embodiments are specifically given in the following description, the invention is not limited to those mentioned.

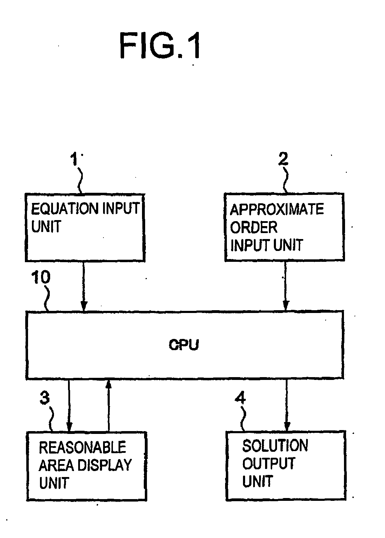

FIG. 1 is a block diagram of a design aiding apparatus of the invention. The design aiding apparatus includes an equation input unit 1, an approximate order input unit 2, a reasonable area display unit 3, a solution output unit 4, and a CPU 5.

The equation input unit 1 stores an equation of an unknown function u, an initial condition IC and a boundary condition BC, and outputs those to the CPU 5.

Equations to be handles may include differential equations in physics, and there is no limitation. This is because an equation and a boundary condition, an initial condition or a restriction condition accompanying an equation are equally algebraically expressed, and acquisition of a solution thereof is easy.

Boundary conditions include conventional boundary conditions, such as a boundary condition which gives the value of an unknown function in the direction normal to the boundary (Neuman type), a boundary condition which gives the value of an unknown function at a point on the boundary (Dirichle type), and a Robin type which gives a value of the combination of the Neuman type and the Dirichle type. With regard to a 2-point boundary value problem of an ordinary differential equation, when values at both ends are to be designated, it is a double-end Dirichle type. When a value at one end is to be designated, it is simply called a Dirichle type. When an inclination at one end is to be designated, it is equivalent to a Neuman type.

However, boundary conditions that can be handled in the present invention may include a boundary condition which has a differential term of second order added to a Robin type. This is because a boundary condition, however higher its order is, is algebraically expressed as linear combination of selected orthonomal bases. To give a boundary condition on a line on the boundary, a boundary condition should be integrated over the line. Because an initial condition and a boundary condition are equally algebraically expressed in the present invention, the present invention is featured by equally giving restriction conditions to equations.

The approximation order input unit 2 allows a user to determine an approximation order number $n$ of an unknown function u (select an adequate orthonomal basis matching with the initial condition IC and the boundary condition BC, and let $n$ be the number of orthonomal bases ONB(x) to be used), and outputs the approximate order number $n$ to the CPU 5.

The reasonable area display unit 3 receives an area satisfying the initial condition IC and the boundary condition BC (hereinafter called "reasonable area") from the CPU 5, and presents graphic display of the reasonable area. When the number of ONB(x) to be associated with one another by the initial condition and the boundary condition is $m$, the reasonable area is the (n-m)-th order real space.

The solution output unit 4 outputs a solution calculated by the CPU 5 to a printer, a display or the like. As the user acquires a solution of an equation u while viewing the reasonable area, it is preferable to provide the solution output unit 4 with a display in addition to the reasonable area display unit 3.

In this manner, the CPU 5 calculates the value of an objective function with stationary points in the reasonable area (peak or bottom point) and points in the neighborhood thereof being candidate points, and selects that candidate point in multiple candidate points which provides a minimum calculation result as a solution. The objective function is an error caused in an approximate solution, a square error or so and is defined at each point in the reasonable area.

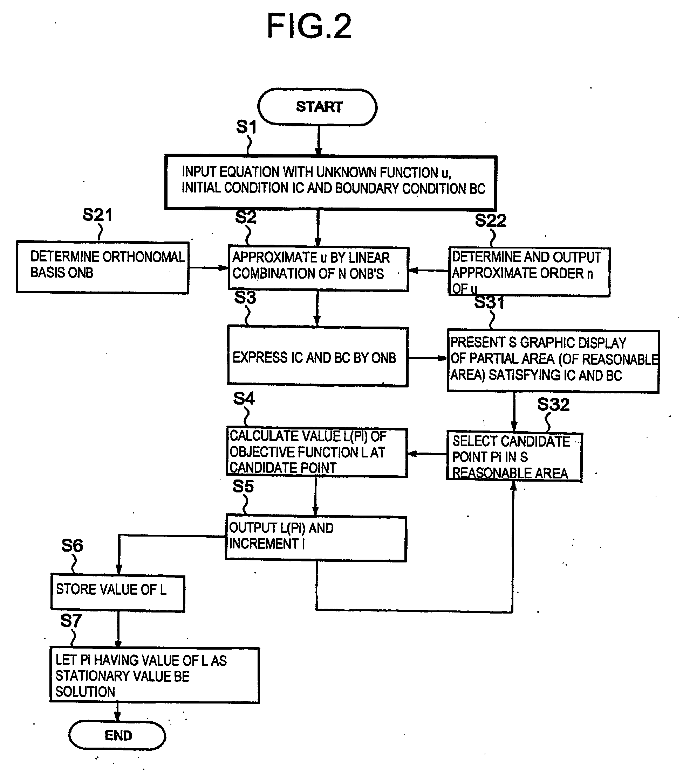

FIG. 2 is a flowchart illustrating the operation of the design aiding apparatus according to the present embodiment. First, an equation of an unknown function u, an initial condition IC and a boundary condition BC are input to the equation input unit 1 in S1.

Then, an orthonomal basis is selected in S21 before S2, then, the flow moves to S2. As an orthonomal basis ONB, for example, the bases Sin(jwt), cos(jwt), etc. of a Fourier series should be selected. An approximate order number $n$ of the unknown function u is decided in S22 before S2, after which the flow goes to S2.

In S2, the CPU 5 approximates the unknown function u with linear combination of $n$ orthonomal bases ONB. Acquisition of the value of the linear combination coefficient itself is the acquisition of a solution of an equation.

Next, the initial condition IC and the boundary condition BC are expressed by orthonomal bases ONB in S3.

Following S3, the aspect of the reasonable area that satisfies the initial condition IC and the boundary condition BC is graphically displayed in S31. As the graphic display is a three-dimensional display at most, however, various cross sections should be displayed.

In S32, a candidate point $P_i$ which may give a solution of the unknown function u (i being started at 1 and incremented thereafter as will be described later) is selected from the reasonable area.

In S4, the value, L(Pi), of the objective function L at the candidate point Pi is calculated.

Next, the objective function L(Pi) is output in S5. Then, the flow returns to S32 to select a next candidate point followed by calculation of an objective function at the next candidate point in S4.

Objective function values at a plurality of (multiple) points are calculated this way, and the calculation results are accumulated in S6.

Finally, a point of a capacitive area which minimizes the value of the objective function is decided to be the solution of the equation in S7.

[First Embodiment]

[Second-order Poisson Equation]

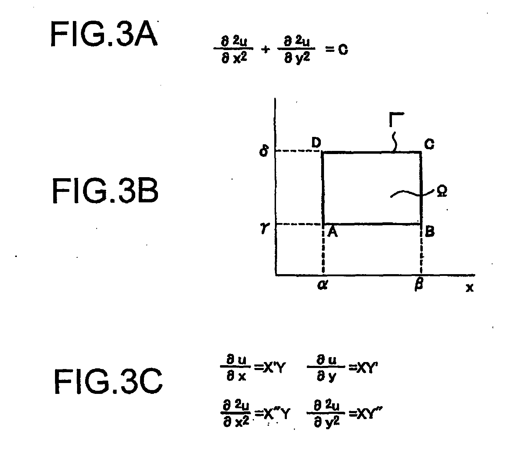

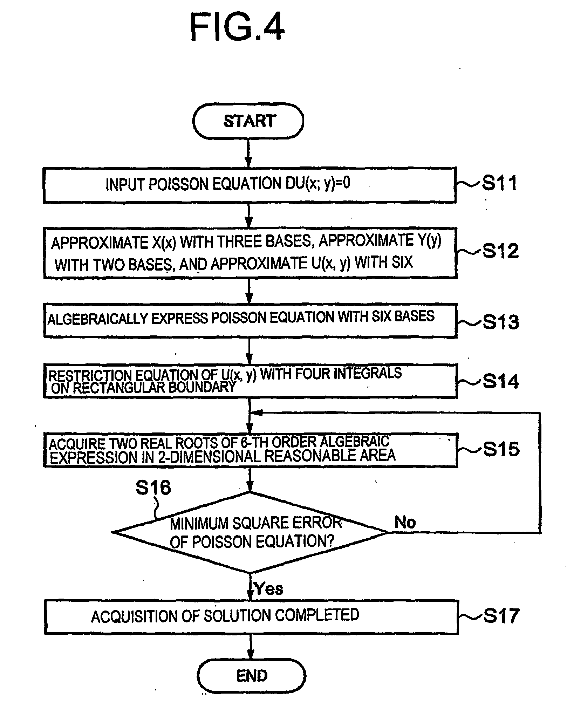

FIG. 3 shows a Poisson equation and a boundary condition. FIG. 4 is a flowchart for acquiring a solution of the first embodiment. Referring to FIGS. 3 and 4, the first embodiment will be described.

To begin with, in S11, a two-dimensional Poisson equation which the unknown function u(x, y) satisfies, and a boundary condition at the boundary in a rectangular area are input.

Then, the unknown function u is expanded with an orthonomal basis ONB(ψi, φi) in S12. For the sake of simplifying the description, five orthonomal bases are used.

With u(x, y)=X(x)•Y(y) where

$$X(x) = (p1\psi 1(x) + p2\psi 2(x) + p3\psi 3(x)) \qquad (1)$$

$$Y(y) = (k1\phi(y) + k2\phi(y)) \qquad (2)$$

u(x, y) can be expressed by (ψi φj). It is easily proved that τk(x, y) = (ψi(x) • φj(y)) (k=1 to 6) is also orthonomal for integration of (ψi φj) is integration of ψiψjφkφm (i, j=1 to 3; k, m= 1 to 2) and τk is orthonomal using the orthonomal functionality of ψi and φi. Thus, using an orthonomal basis OCN(τk(x, y)), u(x, y) is given as follows.

$$u(x, y) = a1\tau 1(x, y)$$
$$+ a2\tau 2(x, y)$$
$$+ a3\tau 3(x, y)$$
$$+ a4\tau 4(x, y)$$
$$+ a5\tau 5(x, y)$$
$$+ a6\tau 6(x, y) \qquad (3)$$

where

$$\tau 1 = \psi 1(x) \bullet \phi 1(y)$$

$$\tau 2 = \psi 1(x) \bullet \phi 2(y)$$

$$\tau 3 = \psi 2(x) \bullet \phi 1(y)$$

$$\tau 4 = \psi 2(x) \bullet \phi 2(y)$$

$$\tau 5 = \psi 3(x) \bullet \phi 1(y)$$

$$\tau 6 = \psi 3(x) \bullet \phi 1(y) \tag{4}$$

Next, the Poisson equation is algebraically expressed with ONB in S13. As the results of differentiating X(x) and Y(y) are expressed by the orthonomal functions $\psi i$, $\phi i$,

$$dX(x)/dx = q1\psi 1(x) + q2\psi 2(x) + q3\psi 3(X)$$

$$dY(y)/dy = r1 \phi 1(y) + r2 \phi 2(y) \tag{5}$$

Likewise,

$$d^2 X(x)/dx^2 = l1\psi 1(x) + l2\psi 2(x) + q3\psi 3(X)$$

$$d^2 Y(y)/dy^2 = m1 \phi 1(y) + m2 \phi 2(y) \tag{6}$$

As shown in FIG. 3(C), the second-order differential term on x in the unknown function u(x, y) is X"Y, and the second-order differential term on y in the unknown function u(x, y) is XY". Thus, the Poisson equation (PE) is also expressed by linear combination of $\tau 1$ to $\tau 6$.

$$PE = b1 \tau 1(x, y)$$

$$+ b2 \tau 2(x, y)$$

$$+ b3 \tau 3(x, y)$$

$$+ b4 \tau 4(x, y)$$

$$+ b5 \tau 5(x, y)$$

$$+ b6 \tau 6(x, y) \tag{7}$$

A Poisson equation can be algebraically expressed with linear combination of orthonomal bases ONB as given above.

Next, the boundary condition is algebraically expressed in S14. Let us see the relationship between linear combination approximation and the boundary condition when u(x, y)=g1(x) is given on a line AB on a boundary Γ shown in FIG. 3(B).

To prepare for the process, a first-order 2-point boundary value problem, not a boundary value problem on the line AB, is considered. It is assumed that an unknown function X(x) is 4 when x=0, and 1 when x=1.

X(x) is approximated with linear combination of an orthonomal basis.

$$X(x) \approx k1\psi\ 1(x)+k2\psi\ 2(x) \qquad (8)$$

Using this approximation, the boundary condition at the origin is expressed as follows.

$$k1\psi\ 1(0)+k2\psi\ 2(0)=4 \qquad (9)$$

This equation is equal to the internal product of (X(0)-4) and the Dirichle delta function 8(x) as will be shown by the following equation.

[Eq. 1]

$$\langle (X(0) - 4), \delta(x) \rangle$$

$$= \int_{-\infty}^{\infty} (X(0) - 4)\delta(x)dx$$

$$= K_1 \int_{-\infty}^{\infty} \psi_1(0)\delta(x)dx + K_2 \int_{-\infty}^{\infty} \psi_2(0)\delta(x)dx - 4 \int_{-\infty}^{\infty} \delta(x)dx$$

$$= K_1\psi_1(0) + K_2\psi_2(0) - 4$$

Next, let us consider a second-order boundary value problem. Now, a delta function δAB which is infinite only on a line AB and is zero otherwise is defined. The two-dimensional boundary value problem is equivalent to orthogonal projection of X(x) on the line AB which is a partial area of an area Q having an approximation being gl(x). The boundary condition equation gl(x) on the line AB is one vector (functional point) in a functional space IΓ based on the boundary Γ. While the spatial orders of Ω and Γ are 2 and 1, respectively, the orders dimIΩ and dimIΓ in the functional space are both infinite. That is, the vector X(x) defined in the area Ω is out of IF, but its orthogonal projection to IF is considered to be the best approximate in IΓ. In other words, a vector obtained by subtracting g1(x) from the approximate vector X(x) is also orthonomal to any vector in the IΓ-based functional space.

The following equation expresses the base vector δAB of the functional space on the line AB.

[Eq. 2]

$$\delta_{AB} = \delta(x - u)\delta(y - v)$$

$$\alpha \leqq u \leqq \beta$$

$$v = 8$$

Using the equation, the orthogonal projection on the line AB is given by the following equation.

[Eq. 3]

$$OP(F(x,y)) = \int_{-\infty}^{\infty} \left[ \int_{\alpha}^{\beta} F(x,y)\delta(x-u)dy \right] \delta(y-v)dv$$

The equation of this orthogonal projection OP(x, y) to gl(x) is a boundary condition on the line AB.
The relationship between the approximate function u(x, γ) and the boundary condition g1(x) is given by integrating the following equation using the aforementioned base vector δAB.

$$U(x, \gamma) = a1\tau1(x, \gamma)$$
$$+a2\tau 2(x, \gamma)$$
$$+a3\tau 3(x, \gamma)$$
$$+a4\tau 4(x, \gamma)$$
$$+a5\tau 5(x, \gamma)$$
$$+a6\tau 6(x, \gamma) = g1(x) \qquad (10)$$

Likewise, a constant linear equation is acquired from boundary lines BC, CD and AD.

Four restriction conditions that are satisfied by the component of the vector A are obtained. Visual display of an area represented by the restriction conditions can therefore ensure prediction of the presence of a stable solution, an unstable solution and so forth. It is apparent that acquisition of a solution of a Poisson equation is extremely prospective.

Next, two roots of the following 6-th order algebraic expression in a two-dimensional reasonable area (x-y plane) are acquired in S15.

$$(t-a1)(t-a2)(t-a3)(t-a4)(t-a5)(t-a6) = 0$$
$$(11)$$

The reason for acquiring only two roots is that four in six linear combination coefficients are already associated with one another by the boundary condition

Next, in S16, it is determined whether or not objective function (square error in the equation) can be minimized by the two roots acquired in S15. The square error of the Poisson equation $\Delta u=0$ in the first embodiment is $(\Delta u-0)^2=(\Delta u)^2$ where $\Delta u$ in use is algebraically expressed. When the square error is minimized, the two roots acquired already are approximate solutions of the Poisson equation (S17). When the square error is not minimized, the flow returns to S15.

The foregoing is the description of the first embodiment.

If the number of orthonomal bases ONB is increased, the number of components of the vector A (vector having constant coefficients of the linear combination approximation of the unknown function u(x, y) as components) are also increased. The acquisition of a solution in the invention is to decide the vector A. That is, a solution of an equation is acquired by deciding the roots of the 6-th order algebraic expression (9) under the four restriction conditions.

To settle the solution of the equation, however, an error or a square error in the Poisson equation should be minimized.

Although the foregoing description has been given of rectangular boundary conditions, the same is applied to a case where the boundary is not rectangular. For example, a triangular boundary and a trapezoidal boundary can be easily coped and handled. If there is a rule for transformation to a rectangle, a boundary value problem which is directed to a non-rectangular boundary can be handled. Further, Joukowski transformation of a circular area, for example, can be used. An orthonomal basis has only to be selected according to the shape of the boundary. Although the boundary condition like $u(x, \gamma)=g1(x)$ is given on the line AB, it is not restrictive; for example, even under the boundary condition of du/dy+su+t=0, du/dy can be algebraically expressed, so that the algebraically expressed boundary condition should be integrated along the line AB. If the operators of an equation that forms the boundary condition are linear, even a higher-order equation (e.g., y"+iy'+jy=k) can be algebraically expressed. Note that even a non-linear operator may be handled.

Although the foregoing description has been given of a Poisson equation with no constant term, the procedures are exactly the same even if there are constant terms. An approximate solution of a Laplace equation, a wave equation and the like can also be acquired in similar procedures.

In the invention, complex boundary conditions are algebraically expressed before being handled. A boundary condition is fundamentally independent of an equation itself. Conventional general boundary conditions are a displacement designation at a boundary (Dirichle type), and a symmetrical condition on a symmetrical plane (axis) (Neuman type), but more complicated boundary conditions will need to be designated in future. The invention can cope with such a demand using an algebraically expressing scheme.

[Second Embodiment]

[Non-linear Second-order Differential Equation]

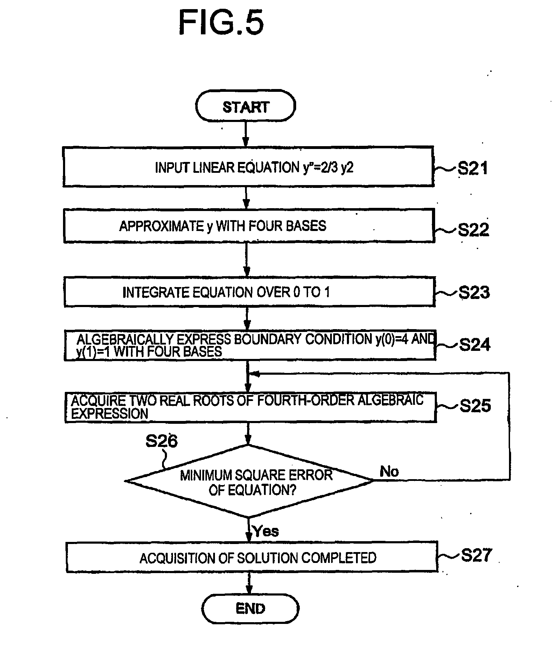

FIG. 5 is a flowchart illustrating the procedure for acquiring a solution according to a second embodiment.
First, an equation and a one-dimensional 2-point boundary condition are input in S21 (a solution of an equation $y''(x)=(2/3)y^2(x)$ is acquired under the conditions of y(0)=4, y(1)=0).
Then, an unknown function y(x) is approximated with four or so orthonomal bases in S22. That is, the unknown function y(x) is approximated as follows.

$$y(x)=b1\psi\ 1(x)+b2\psi\ 2(x)+b3\psi\ 3(x)+b4\psi\ 4(x) \qquad (12)$$

A Fourier series, a Laguerre's polynomial, a . Legendre polynomial or the like is used as $\psi$ in accordance with the boundary condition.
Next, the equation is integrated over the range of 0 to 1 in S23. First, $(y(x))^2$ is integrated over 0 to 1, yielding the following integration result I.

$$I=(2/3)(b1^2+b2^2+b3^2+b4^2) \qquad (13)$$

While y'' may be expressed orthonomally to be $y''=d1\psi1+d2\psi+d3\psi3+d4\psi4$, $y'=c1\psi1(x)+c2\psi2(x)+c3\psi3(x)+c4\psi4(x)$ is used for the sake of convenience of integration of y'' over 0 to 1.
The definite integral of y'' over 0 to 1 is the difference between y'(1) and y'(0).
Constant coefficients c1 to c3 are generated based on b1 to b3 by multiplying a column vector of b1, b2 and b3 by a transform matrix (R) of 3 x 3. Therefore, a definite integral I' of y'' over 0 to 1 is given as follows.

$$I'=c1(\psi\ 1(1)-\psi\ 1(0))$$
$$+c2(\psi\ 2(1)-\psi\ 2(0))$$
$$+c3(\psi\ 3(1)-\psi\ 3(0))$$
$$+c4(\psi\ 4(1)-\psi\ 4(0)) \qquad (14)$$

A differential equation is what the equations 13 and 14 are equated.
Next, the boundary conditions are algebraically expressed in S24. The algebraically expressed boundary conditions are

$$b1\psi\ 1(1)+b2\psi\ 2(1)+b3\psi\ 3(1)+b4\psi\ 4(1)=1 \qquad (15)$$

$$b1\psi\ 1(0)+b2\psi\ 2(0)+b3\psi\ 3(0)+b4\psi\ 4(0)=4 \qquad (16)$$

Integrating the algebraic expressions over 0 to 1 yields the following boundary conditions.

[Eq. 4]

$$\begin{cases} \int_0^1 y'' dx = [y']_0^1 = [c_1\psi_1 + c_2\psi_2 + c_3\psi_3 + c_4\psi_4]_0^1 \\ = (f_1, f_2, f_3, f_4)\begin{pmatrix} c_1 \\ c_2 \\ c_3 \\ c_4 \end{pmatrix} \\ where \\ \quad f_1 = \psi_1(1) - \psi_1(0) \\ \quad f_2 = \psi_2(1) - \psi_2(0) \\ \quad f_3 = \psi_3(1) - \psi_3(0) \\ \quad f_4 = \psi_4(1) - \psi_4(0) \\ or \\ \quad \begin{pmatrix} c_1 \\ c_2 \\ c_3 \\ c_4 \end{pmatrix} = (Kij)\begin{pmatrix} b_1 \\ b_2 \\ b_3 \\ b_4 \end{pmatrix} \end{cases}$$

Next, two roots of the following 4-th order algebraic expression are acquired under two boundary conditions 15 and 16.
(t-b1) (t-b2) (t-b3) (t-b4)=0
The number of unknown roots is reduced to two under the boundary conditions 15 and 16.
The feature of the invention lies in that geometrical visualization of the boundary conditions 11 and 12 can facilitate acquisition of a solution with the presence of a bottom point and a peak point as a key.
Next, minimization of a square error is used to acquire remaining two linear combination constant coefficients in S26. Linear combination constant coefficients that minimize a square error $L=(y''-(3/2)y^2)^2$ of an equation $y''=(3/2)y^2$ which is satisfied by $y''$ and $y^2$ expressed by linear combination constant coefficients are acquired (S27).
The foregoing is the description of the second embodiment.
If the equation does not contain the non-linear term $(3/2)y^2$, L becomes a quadratic equation of b1 to b4, and the condition for retention of L derives a linear equation of b1 to b4, which makes the procedures simple, but becomes a 4-th order equation of b1 to b4 due to the presence of non-linear terms in L.
After the optimization with this equation, referring to the equation 11 yields the following Parseval's equation approximation.

$$b1^2 + b2^2 + b3^2 + b4^2 = constant$$

In this sense, the leading end of the linear combination constant vector B lies on a high-order sphere. The leading end of the solution B minimizes the objective function L, and may be considered as tangential to a small hypersphere with the smallest radius with the origin on a high-order curved surface as the center. As in the case of the MCP scheme of analyzing the crankshaft (Japanese Patent Laid-Open Publication No. 2005-9323), however, the leading end does not lie on a sphere with the radius SQRT(n) (the number of crankshafts being (n+1)). While the restriction surface is moved with the sphere fixed in the MCP scheme, the radius of the sphere is moved with the restriction surface fixed in the invention.

[Third Embodiment]

[Mathieu Equation]

This equation appears when a Helmholtz equation is to be solved on the elliptic cylindrical coordinates or rotary ellipsoidal coordinates. Let us consider the following equation.

$$d^2y/dt^2+(1-2q\cos(2t))y=0$$

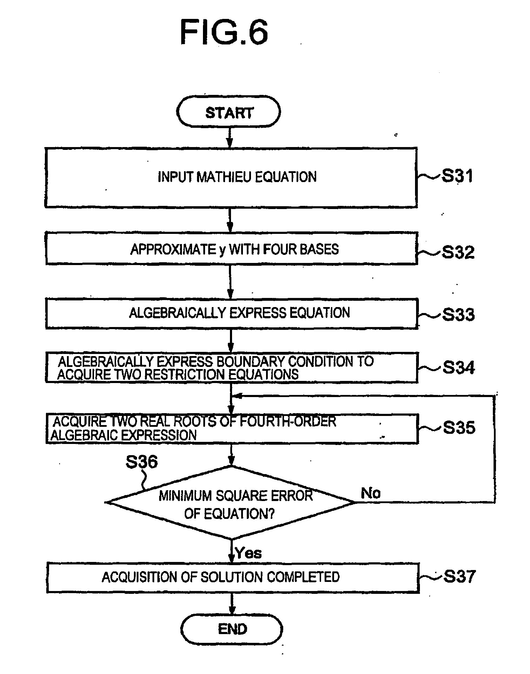

FIG. 6 is a flowchart for acquiring a solution according to the third embodiment.
With a start time t=0, the boundary conditions are

$$y(0)=y(\pi)$$

$$y'(0)=y'(\pi)$$

To solve the equation, an equation and a restriction condition are input in S31.
Next, an unknown function y is approximated with four bases ONB.
The orthonomal base expansion of the unknown function y is carried out as follows.

$$y=b1\psi1(t)+b2\psi2(t)+b3\psi3(t)+b4\psi(t) \qquad (17)$$

Next, the equation is algebraically expressed in S33. Like the equation 15, y' and y" are given as follows.

$$y'=c1\psi1(t)+c2\psi2(t)+c3\psi3(t)+c4\psi(t) \qquad (18)$$

$$y''=d1\psi1(t)+d2\psi2(t)+d3\psi3(t)+d4\psi(t) \qquad (19)$$

Given that a column vector of b1 to b4 is (B) and a transform matrix is (K1), then
column vector (C) of c1 to c4 = (K1) (B)
column vector (D) of d1 to d4 = (K2) (B)
The Mathieu equation can be algebraically expressed using the equations 15 and 17.
Next, the boundary conditions are algebraically expressed in S34. While the boundary conditions are obtained by substituting t=0 and $\pi$ in the equation 17 and the equation 18, they are given as follows in the vector form.

$$(\psi^T(0)(B)=(\psi^T(\pi))(B) \qquad (20)$$

$$(\psi^T(0)(K1)(B)=(\psi^T(\pi))(K1)(B) \qquad (21)$$

The result of integrating those equations over 0 to $\pi$ are the boundary conditions.
Next, a solution of an algebraic expression which minimizes a square error in the equation is acquired in S35, S36 and S37. The algebraic expression is:

(t-b1) (t-b2) (t-b3) (t-b4)

This 4-th order algebraic expression is solved under the restriction conditions 20 and 21. This makes it sufficient to acquire two roots.

In the vector form, the objective function L becomes:

$$
\begin{aligned}
L &= \int (y'' + (1-2q\cos 2t)\, y)^2 dt \\
&= (B)^T (K1)^T \bullet (\int ((\psi(t)) \bullet (\psi(t))^T dt) \bullet (K2)(B) \\
&\quad + 2(B)^T (K2)^T \bullet (\int ((\psi(t)) \bullet (1-2q\cos 2t) \bullet (\psi(t))^T dt) \bullet \\
&\quad (B) + (B)^T (K2)^T \bullet (\int ((\psi(t)) \bullet (1-2q\cos 2t) \bullet (\psi(t))^T dt) \bullet (B)
\end{aligned}
$$

The integration is done over 0 to $\pi$. The objective function L, regardless of whether it is a parametric oscillation or a function of time t, becomes a quadratic curve form of (B).

The foregoing is the description of the third embodiment.

The boundary conditions can be given by

$y(t+\pi)=\exp(i\pi v)y(t)$ (Floquet solution)

in which case, the vector expressions of the boundary conditions become:

$$
(\psi(\pi))^T \bullet (B) = \exp(i\pi v) \bullet (\psi(0))^T \bullet (B)
$$

$$
(\psi(\pi))^T \bullet (K1) \bullet (B) = \exp(i\pi v) \bullet (\psi(0))^T \bullet (B)
$$

The two linear coefficients that are satisfied in b1 to b4 are generally complex numbers, but all the roots of the equation 18 are nonetheless real roots.

[Fourth Embodiment]

[Hill Equation]

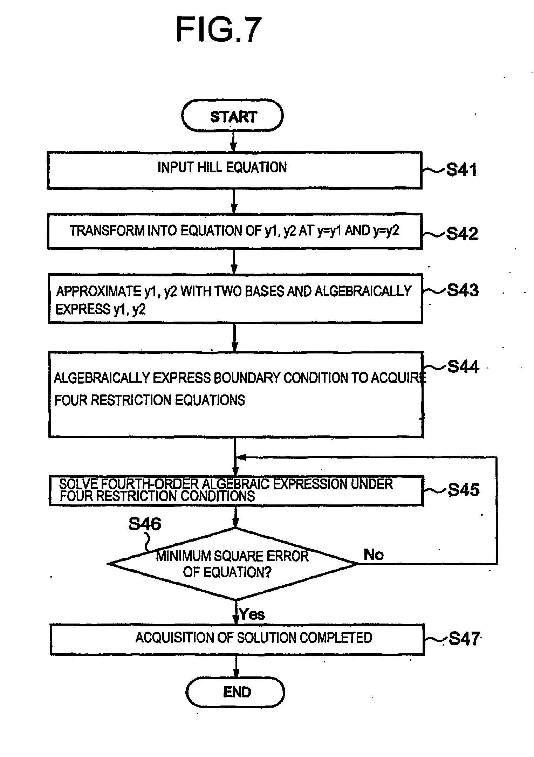

A Hill equation appears when a sprint constant changes with time like $md^2y/dt^2+k(t)y=0$, and is $k(t+T)=k(t)$. FIG. 7 is a flowchart for acquiring a solution according to the fourth embodiment.

First, a Hill equation and a restriction condition are input in S41.

Then, equations are generated in S42. That is, letting y=y1 and dy/dt=y2 and letting the vector expression of the Hill equation with respect to a column vector (X) of y1 and y2 be y=y1 and dy/dx=y2, then

$$
[\text{Eq. 5}]
$$

$$
\frac{d}{dx}\begin{pmatrix} y_1 \\ y_2 \end{pmatrix} = \begin{pmatrix} 0 & 1 \\ -k(x) & 0 \end{pmatrix}\begin{pmatrix} y_1 \\ y_2 \end{pmatrix}
$$

Next, the equations are approximated with two bases, respectively, in S43.

$$
y1 = b1\phi1(t) + b2\phi2(t) \tag{22}
$$

$$y2=c1\phi1(t)+c2\phi2(t) \qquad\qquad (23)$$

Next, the following boundary conditions are algebraically expressed in S44.

$$y1(T)=y1(0)$$

$$y2(T)=y2(0)$$

$$dy1/dt(0)=dy2/dt(0)$$

$$dy1/dt(T)=dy2/dt(T) \qquad\qquad (24)$$

Substituting the equation 21 and the equation 22 into four boundary conditions 24 allows the boundary conditions to be algebraically expressed. The results are integrated to acquire boundary conditions.

Next, four roots of the following 4-th order algebraic expression are acquired in S45 to S47.

(t-b1)(t-b2)(t-c1)(t-c2)=0

Note that the objective function is expressed by the following equation.

[Eq. 6]

$$L = \int_0^T \left\{ \left( \frac{dy_2}{dt} + K(t)y_1 \right)^2 + \left( \frac{dy_1}{dt} - y_2 \right)^2 \right\}^{dt}$$

The foregoing is the description of the fourth embodiment.

In the fourth embodiment, four linear combination constant coefficients (b1, b2, c1, c2) are associated with four restriction relationships 24. As the restriction is strong here, 3-base expansion and 4-base expansion should be considered. Employing smooth connection conditions given below makes it easier to increase the number of bases.

$$(dy1/dt(T)=dy1/dt(0), \ dy2dt(T)=dy2/dt(0)$$

[Fifth Embodiment]

[Integration Problem]

Solutions of y'=f(x) and y(0)=C are y=∫f(t)dt+C

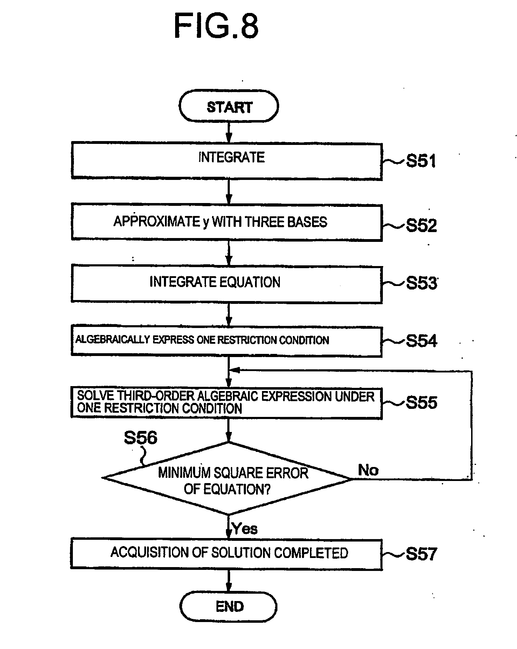

(The integration takes place over 0 to x.) The solutions are acquired according to the invention. FIG. 8 is a flowchart for acquiring a solution according to the fifth embodiment.

First, an equation and a boundary condition (restriction condition) are input in S51.

$$y=b1\psi1(x)+b2\psi2(x)+b3\psi3(x) \qquad\qquad (25)$$

Then, the equation 25 is substituted in the equation for obtaining an algebraic expression, and the equation is then integrated in S52.

Then, the restriction condition is algebraically expressed in S54. The result is

$$b1\psi1(0)+b2\psi2(0)+b3\psi3(0)=C \qquad (26)$$

This is the boundary condition.
Next, roots of the algebraic expression satisfied by b1 to b3 are acquired in S55 to S57.
The algebraic expression is given as follows.

$$(t-b1)\ (t-b2)\ (t-b3)$$

$$=t^{3}-(b1+b2+b3)\,t^{2}+(b1b2+b2b3+b3b1)\,t+b1b2b3 \qquad (27)$$

If the restriction condition equation 26 is rewritten for b3, for example, as given below and the rewritten equation is substituted into the algebraic expression, roots to be obtained become just b1 and b2. Therefore, two real roots should be found in a reasonable area in the two-dimensional real space.
In S56, the objective function L is what is obtained by integrating the following square root over 1 to $\alpha$.

$$(b1\psi1(x)+b2\psi(x)+b3\psi3(x)-f(x))^{2}$$

While a is finite, it is set to a sufficient large value as needed.
The foregoing is the description of the fifth embodiment.

[Sixth Embodiment]

[Initial Value Problem]

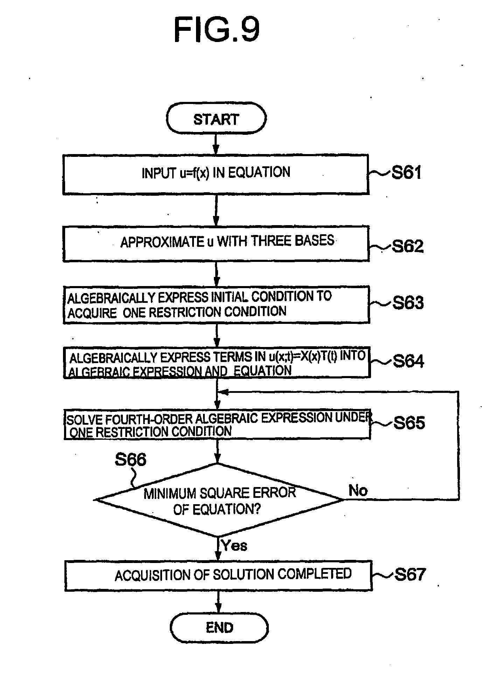

In this embodiment, the following equation is solved. FIG. 9 is a flowchart for acquiring a solution according to the sixth embodiment.

[Eq. 7]

$$\frac{\partial u}{\partial \tau} = a\frac{\partial u}{\partial x}$$

$$t = 0 \text{にて} u = f(x)$$

First, an equation and a boundary condition (restriction condition) are input in S61.
Then, in S62, u=T(t)X(x) and variable separation are performed to approximate T(x) and X(x) with bases of two terms, respectively.

$$T(t)=a1\phi1(t)+a2\phi2(t)$$

$$X(x)=c1\xi1(x)+c2\xi2(x)$$

Then,

```
u=a1c1φ1(t)ξ1(x)

   +a1c2φ1(t)ξ2(x)

   +a2c1φ2(t)ξ1(x)

   +a2c2φ2(t)ξ2(x)

   =b1τ1(t, x)

   +b2τ1(t, x)

   +b3τ(t, x)

   +b4τ4(t, x)                    (28)
```

Those are the same procedures as used for a Poisson equation.

Next, in S63, the initial condition is algebraically expressed, and is integrated over 0 to $\alpha$, yielding the following initial condition equation.

$$[\text{Eq. 8}]$$
$$b_1 \int_0^\alpha \tau(0,x)dx + b_2 \int_0^\alpha \tau(0,x)dx + b_3 \int_0^\alpha \tau(0,x)dx + b_4 \int_0^\alpha \tau(0,x)dx = \int_0^\alpha f(x)dx$$

where a is finite but is set to a sufficiently large value as needed.

Next, the equation is algebraically expressed using the equation 27 in S64 as done in the case of the Poisson equation.

Next, three roots of a 4-th order algebraic expression which minimize the square error of the equation are acquired in S65 to S67 as done in the first to fifth embodiments for there is one restriction condition.

The objective function is given by the following equation.

$$[\text{Eq. 9}]$$
$$L = \int_0^\alpha \left( \int_0^\infty (XT' - aX'T)^2 \, dt \right) dx$$

where $\alpha$ is finite but is set to a sufficiently large value as needed.

[Seventh Embodiment]

[Design of Attractor]

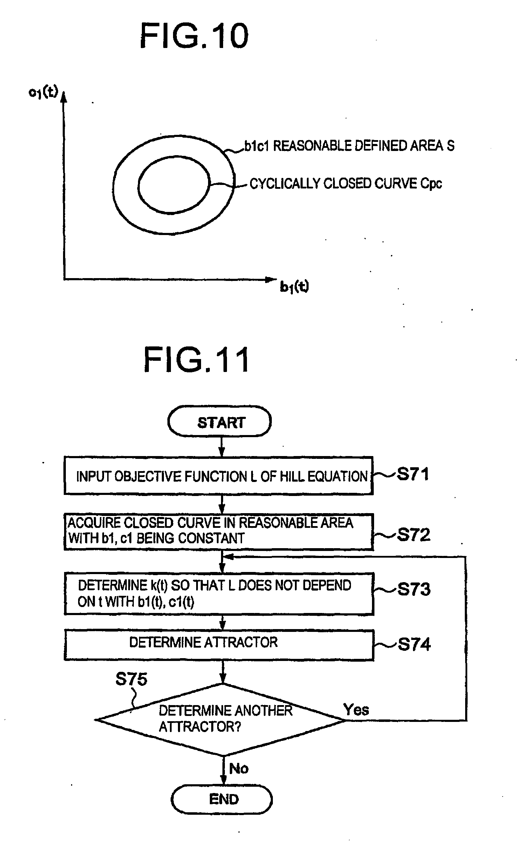

An attractor can be designed by applying how to handle the Hill equation in the fifth embodiment. An attractor never passes the same place twice, but keeps taking a cyclic locus motion in a finite area. FIG. 10 is a conceptual diagram of generating one attractor from a close curve Cpc in a reasonable area E, and FIG. 11 is a flowchart for generating an attractor.

First, the objective function L of a Hill equation is input in S71.

Then, with b1 and c1 being constant, a close curve in a reasonable area is acquired in S72.

Next, as, with b1(t) and c1(t), k(t) is determined so that the objective function L does not depend on time t in S73, an attractor is generator (S74). To generate another attractor, the flow returns to S73.

The invention can be adapted to a design aiding apparatus that handles a partial differential equation, an integral equation, a recurrence formula equation, and a non-linear equation each of which involves a complex boundary condition and initial condition, Governing equations which matter in aiding designing include a basic equation of elasticity (large deflection structural problem), a parabolic partial differential equation (diffusion of heat and materials), an Euler's equation (potential flow), a Navier-Stokes equation (non-linear partial differential equation, incompressible and compressible flows, chemical reaction analysis, combustion analysis), a wave equation, control, and optimization (maximization and minimization of an objective function).

Besides a third-order non-linear equation such as a Navier-Stokes equation, the invention can be adapted to acquisition of solutions of vibration problems, such as a Mathieu equation and a Hill equation, even in the field of a 2-point boundary value problem. For example, the invention is applicable to designing of a gear transmission mechanism, such as a spur gear, to which a Mathieu equation is adapted, as well as a countermeasure against wind power vibration of high-voltage power lines, countermeasures to stabilize suspending chains of a crane for a high building and improve a working environment for the operation thereof, and a countermeasure against a change in tension of railroads, electric trains and power lines. '

With regard to limit design parts, specific applicable industrial fields include a long and large bridge, a tank, a container, engine components (piston, frame, cover, crank, tension bolt, turbine, blade, Christmas tree, rotor, hub), a gas engine which avoids knocking detonation, a vehicle cabin, a boiler pipe, a drum, a furnace's wall, a double hull, a propeller, and parts around an engine's combustion chamber (fire-proof resistive face having resistivity against thermal stress and material, air supply and exhaust valves, piston crown).

The invention is also adaptable to a storker type incinerator and a rotary furnace in sufficient consideration of emission gas, an incinerator anticipating incinerator wall melt loss, an air fin cooler with the site condition and the surround terrain taken into account and recirculation avoidable, a cooling tower and a radiator with a countermeasure against white fuming, a chimney stack adopting a stack rain avoidance scheme, LNG/LPG tanks and a liquefied gas tank with a density difference and air jet mixture taken into account, a sloshing-suppressed tank structure, stress-analyzed aircraft parts (wings, blades), a crossflow fan, a fan motor fin, a tunnel exhaust fan, a rotary kiln, a blast furnace, and a coal silo.

In different view points, the invention is also adaptable to a Stefan problem (problem such that the boundary condition changes with time; for example, contact non-linear problem between matters, soil freezing and tank floating after activation of an underground LNG tank, an analysis business, a land analysis business including a soil osmolarity problem, an electromagnetic interference analysis business, a thunder cloud/lighting analysis business, a weather forecast analysis business, and a marine/lake/pool contamination prevention analysis business.

The invention can also be applied to computer-based generation of the loci of a chaos, an attractor and a limit cycle.

## Claims

1. A design aiding apparatus which acquires a solution of an equation with an unknown function u, comprising:

   an equation input unit which inputs the equation and an initial condition and/or a boundary condition thereof, or a restriction condition involved in the equation;
   an approximate order input unit which inputs the unknown function u when the unknown function u is approximated by linear combination of an orthonomal basis of the finite number n;
   a CPU which computes an error in the equation caused by approximation and expressed by a max norm, 1-norm, 2-norm, Minkowski norm, Holder norm or a norm satisfying an axiom of a distance;
   a reasonable area display unit which displays an area of real space of an (n-m)-th order where m is a number of combination coefficients of the linear combination associated with one another by the initial condition and/or the boundary condition; and
   a solution output unit which outputs the solution of the equation, wherein
   with an arbitrary point in the reasonable area being a candidate point, the error at the candidate point is calculated, the error at another candidate point is calculated, and
   a point in the reasonable area which minimizes the error is acquired as a solution.

2. The design aiding apparatus according to claim 1, wherein the equation is Du=C where D is a differential operator, an integral operator, a recurrence formula map operator, or a non-linear operator in a non-linear equation, C is a constant, and u is an unknown function, and the norm ||Du-C|| which is the error is calculated using Du=C after the u is approximated by the linear combination and the whole equation is algebraically expressed.

3. The design aiding apparatus according to claim 1, wherein the reasonable area display unit presents at least a two-dimensional graphic display when the reasonable area is two-dimensional or less, presents a three-dimensional graphic display or displays a plurality of graphs hierarchized into a two-dimensional area when the reasonable area is three-dimensional or greater, and

presents a three-dimensional graphic display or displays a three-dimensional graph or a contour map hierarchized into a two-dimensional area when a curved surface of the reasonable area is three-dimensional or greater.

4. The design aiding apparatus according to claim 1, wherein in an algebraic expression which has a coefficient bi (i being 1 to n) of the linear combination as a root, the CPU limits every root to a real number, or limits every root to one located in a partial area within a complex plane when the root is paired conjugate roots.

5. A computer program that allows a computer to function as:

   an equation input unit which inputs an equation with an unknown function u and an initial condition and/or a boundary condition thereof;
   an approximate order input unit which inputs the unknown function u when the unknown function u is approximated by linear combination of an orthonomal basis of the finite number n;
   a CPU which computes an error in the equation caused by approximation and expressed by a max norm, 1-norm, 2-norm, Minkowski norm, Holder norm or a norm satisfying an axiom of a distance;
   a reasonable area display unit which displays an area of real space of an (n-m)-th order where m is a number of combination coefficients of the linear combination associated with one another by the initial condition and/or the boundary condition; and
   a solution output unit which outputs the solution of the equation, wherein
   with an arbitrary point in the reasonable area being a candidate point, the error at the candidate point is calculated, the error at another candidate point is calculated, and
   a point in the reasonable area which minimizes the error is acquired as a solution.

6. The computer program according to claim 5, wherein the equation is Du=C where D is a differential operator, an integral operator, a recurrence formula map operator, or a non-linear operator in a non-linear equation, C is a constant, and u is an unknown function, and the norm $\|Du-C\|$ which is the error is calculated using Du=C after the u is approximated by the linear combination and the whole equation is algebraically expressed.

7. The computer program according to claim 5, wherein the reasonable area display unit presents at least a two-dimensional graphic display when the reasonable area is two-dimensional or less,
   presents a three-dimensional graphic display or displays a plurality of graphs hierarchized into a two-dimensional area when the reasonable area is three-dimensional or greater, and
   presents a three-dimensional graphic display or displays a three-dimensional graph or a contour map hierarchized into a two-dimensional area when a curved surface of the reasonable area is three-dimensional or greater.

8. The computer program according to claim 5, wherein in an algebraic expression which has a coefficient bi (i being 1 to n) of the linear combination as a root, the CPU limits every root to a real number, or limits every root to one located in a partial area within a complex plane when the root is paired conjugate roots.

9. The computer program according to claim 5, including:

   a first procedure of inputting an unknown function u, an initial condition and a boundary condition;
   a second procedure of separating variables from the unknown function u and approximating functions of the variables by linear combination of respective different orthonomal bases;
   a third procedure of expressing the equation with the orthonomal bases and generating an algebraic expression having a linear combination constant included in the expression of the equation as a root;
   a fourth procedure of expressing the initial condition and the boundary condition with the orthonomal bases to acquire at least one restriction condition;
   a fifth procedure of acquiring a root of the algebraic expression under the at least one restriction condition; and
   a sixth procedure of determining whether or not the root minimizes the error of the algebraic expression, wherein
   the root is taken as a solution of the equation when it is determined that the error is a minimum, and
   the computer program returns to the fifth procedure when it is determined that the error is not a minimum.

10. The computer program according to claim 5, including:

   a first procedure of inputting an unknown function u, an initial condition and a boundary condition;
   a second procedure of approximating the unknown function u by linear combination of an orthonomal basis;
   a third procedure of performing definite integral of the equation and generating an algebraic expression having a linear combination constant included in the definite integral as a root; _
a fourth procedure of expressing the initial condition and the boundary condition with the orthonomal bases to acquire at least one restriction condition;
a fifth procedure of acquiring a root of the algebraic expression under the at least one restriction condition; and
a sixth procedure of determining whether or not the root minimizes the error of the algebraic expression, wherein the root is taken as a solution of the equation when it is determined that the error is a minimum, and
the computer program returns to the fifth procedure when it is determined that the error is not a minimum.

**11.** The computer program according to claim 5, including:

a first procedure of inputting an unknown function u, an initial condition and a boundary condition;
a second procedure of approximating the unknown function u by linear combination of an orthonomal basis;
a third procedure of generating an algebraic expression having a linear combination constant included in the linear combination as a root;
a fourth procedure of expressing the initial condition and the boundary condition with the orthonomal bases to acquire at least one restriction condition;
a fifth procedure of acquiring a root of the algebraic expression under the at least one restriction condition; and
a sixth procedure of determining whether or not the root minimizes the error of the algebraic expression, wherein the root is taken as a solution of the equation when it is determined that the error is a minimum, and
the computer program returns to the fifth procedure when it is determined that the error is not a minimum.

# FIG.1

```
   1                              2
 ┌──────────────┐        ┌──────────────┐
 │EQUATION INPUT│        │APPROXIMATE   │
 │UNIT          │        │ORDER         │
 │              │        │INPUT UNIT    │
 └──────┬───────┘        └──────┬───────┘
  10    │                       │
 ┌──────▼───────────────────────▼──────┐
 │               CPU                    │
 └──┬────▲──────────────────┬──────────┘
  3 │    │                4 │
 ┌──▼────┴──────┐        ┌──▼──────────┐
 │REASONABLE    │        │SOLUTION     │
 │AREA DISPLAY  │        │OUTPUT       │
 │UNIT          │        │UNIT         │
 └──────────────┘        └─────────────┘
```

# FIG.2

START

S1

INPUT EQUATION WITH UNKNOWN FUNCTION u,
INITIAL CONDITION IC AND BOUNDARY CONDITION BC

S21

DETERMINE ORTHONOMAL
BASIS ONB

S2

APPROXIMATE u BY LINEAR
COMBINATION OF N ONB'S

S22

DETERMINE AND OUTPUT
APPROXIMATE ORDER n
OF u

S3

EXPRESS IC AND BC BY ONB

S31

PRESENT S GRAPHIC DISPLAY
OF PARTIAL AREA (OF REASONABLE
AREA) SATISFYING IC AND BC

S4

CALCULATE VALUE L(Pi) OF
OBJECTIVE FUNCTION L AT
CANDIDATE POINT

S32

SELECT CANDIDATE
POINT Pi IN S
REASONABLE AREA

S5

OUTPUT L(Pi) AND
INCREMENT I

S6

STORE VALUE OF L

S7

LET Pi HAVING VALUE OF L AS
STATIONARY VALUE BE
SOLUTION

END

# FIG.3A

$$\frac{\partial^2 u}{\partial x^2} + \frac{\partial^2 u}{\partial y^2} = 0$$

# FIG.3B

# FIG.3C

$$\frac{\partial u}{\partial x} = X'Y \qquad \frac{\partial u}{\partial y} = XY'$$

$$\frac{\partial^2 u}{\partial x^2} = X''Y \qquad \frac{\partial^2 u}{\partial y^2} = XY''$$

# FIG.4

START

INPUT POISSON EQUATION DU(x; y)=0 ～S11

APPROXIMATE X(x) WITH THREE BASES, APPROXIMATE Y(y) WITH TWO BASES, AND APPROXIMATE U(x, y) WITH SIX ～S12

ALGEBRAICALLY EXPRESS POISSON EQUATION WITH SIX BASES ～S13

RESTRICTION EQUATION OF U(x, y) WITH FOUR INTEGRALS ON RECTANGULAR BOUNDARY ～S14

ACQUIRE TWO REAL ROOTS OF 6-TH ORDER ALGEBRAIC EXPRESSION IN 2-DIMENSIONAL REASONABLE AREA ～S15

S16

MINIMUM SQUARE ERROR OF POISSON EQUATION?  No

Yes

ACQUISITION OF SOLUTION COMPLETED ～S17

END

# FIG.5

START

INPUT LINEAR EQUATION y″=2/3 y2    ~S21

APPROXIMATE y WITH FOUR BASES    ~S22

INTEGRATE EQUATION OVER 0 TO 1    ~S23

ALGEBRAICALLY EXPRESS BOUNDARY CONDITION y(0)=4 AND y(1)=1 WITH FOUR BASES    ~S24

ACQUIRE TWO REAL ROOTS OF FOURTH-ORDER ALGEBRAIC EXPRESSION    ~S25

S26

MINIMUM SQUARE ERROR OF EQUATION?    No

Yes

ACQUISITION OF SOLUTION COMPLETED    ~S27

END

EP 1 808 775 A2

# FIG.6

```
        ┌─────────────┐
        │    START    │
        └─────────────┘
               │
               ▼
┌─────────────────────────────────────┐
│         INPUT MATHIEU EQUATION       │ ~S31
└─────────────────────────────────────┘
               │
               ▼
┌─────────────────────────────────────┐
│      APPROXIMATE y WITH FOUR BASES   │ ~S32
└─────────────────────────────────────┘
               │
               ▼
┌─────────────────────────────────────┐
│     ALGEBRAICALLY EXPRESS EQUATION   │ ~S33
└─────────────────────────────────────┘
               │
               ▼
┌─────────────────────────────────────┐
│ ALGEBRAICALLY EXPRESS BOUNDARY       │ ~S34
│ CONDITION TO ACQUIRE TWO RESTRICTION │
│ EQUATIONS                            │
└─────────────────────────────────────┘
               │
               ▼
┌─────────────────────────────────────┐
│ ACQUIRE TWO REAL ROOTS OF            │ ~S35
│ FOURTH-ORDER ALGEBRAIC EXPRESSION    │
└─────────────────────────────────────┘
               │
        S36    ▼
        ◇ MINIMUM SQUARE ERROR ◇ ──No──►
          ◇ OF EQUATION? ◇
               │
              Yes
               ▼
┌─────────────────────────────────────┐
│   ACQUISITION OF SOLUTION COMPLETED  │ ~S37
└─────────────────────────────────────┘
               │
               ▼
        ┌─────────────┐
        │     END     │
        └─────────────┘
```

26

# FIG.7

```
        ( START )
            │
            ▼
┌─────────────────────────────────────┐
│         INPUT HILL EQUATION         │──S41
└─────────────────────────────────────┘
            │
            ▼
┌─────────────────────────────────────┐
│ TRANSFORM INTO EQUATION OF y1, y2   │──S42
│          AT y=y1 AND y=y2           │
└─────────────────────────────────────┘
            │
            ▼
┌─────────────────────────────────────┐
│ APPROXIMATE y1, y2 WITH TWO BASES   │──S43
│ AND ALGEBRAICALLY EXPRESS y1, y2    │
└─────────────────────────────────────┘
            │
            ▼
┌─────────────────────────────────────┐
│ ALGEBRAICALLY EXPRESS BOUNDARY      │──S44
│ CONDITION TO ACQUIRE FOUR           │
│ RESTRICTION EQUATIONS               │
└─────────────────────────────────────┘
            │
            ▼
┌─────────────────────────────────────┐
│ SOLVE FOURTH-ORDER ALGEBRAIC        │──S45
│ EXPRESSION UNDER FOUR RESTRICTION   │
│ CONDITIONS                          │
└─────────────────────────────────────┘
            │
   S46      ▼
       ◇ MINIMUM SQUARE ERROR ◇──No──┐
       ◇    OF EQUATION?     ◇       │
            │Yes
            ▼
┌─────────────────────────────────────┐
│  ACQUISITION OF SOLUTION COMPLETED  │──S47
└─────────────────────────────────────┘
            │
            ▼
        ( END )
```

# FIG.8

```
        ┌─────────────┐
        │    START    │
        └─────────────┘
               │
               ▼
    ┌─────────────────────────┐
    │        INTEGRATE        │───S51
    └─────────────────────────┘
               │
               ▼
    ┌─────────────────────────┐
    │ APPROXIMATE y WITH THREE BASES │───S52
    └─────────────────────────┘
               │
               ▼
    ┌─────────────────────────┐
    │    INTEGRATE EQUATION    │───S53
    └─────────────────────────┘
               │
               ▼
    ┌─────────────────────────┐
    │ ALGEBRAICALLY EXPRESS ONE RESTRICTION CONDITION │───S54
    └─────────────────────────┘
               │
               ▼
    ┌─────────────────────────┐
    │ SOLVE THIRD-ORDER ALGEBRAIC EXPRESSION UNDER │───S55
    │     ONE RESTRICTION CONDITION     │
    └─────────────────────────┘
               │
     S56       ▼
        ╱─────────────────╲      No
       ╱  MINIMUM SQUARE ERROR ╲─────────┐
       ╲     OF EQUATION?      ╱
        ╲─────────────────╱
               │Yes
               ▼
    ┌─────────────────────────┐
    │ ACQUISITION OF SOLUTION COMPLETED │───S57
    └─────────────────────────┘
               │
               ▼
        ┌─────────────┐
        │     END     │
        └─────────────┘
```

# FIG.9

```
                    ┌─────────────┐
                    │    START    │
                    └──────┬──────┘
                           │
                           ▼
    ┌──────────────────────────────────────────┐
    │        INPUT u=f(x) IN EQUATION           │──S61
    └──────────────────┬───────────────────────┘
                       │
                       ▼
    ┌──────────────────────────────────────────┐
    │      APPROXIMATE u WITH THREE BASES       │──S62
    └──────────────────┬───────────────────────┘
                       │
                       ▼
    ┌──────────────────────────────────────────┐
    │ ALGEBRAICALLY EXPRESS INITIAL CONDITION TO│──S63
    │ ACQUIRE  ONE RESTRICTION CONDITION        │
    └──────────────────┬───────────────────────┘
                       │
                       ▼
    ┌──────────────────────────────────────────┐
    │ ALGEBRAICALLY EXPRESS TERMS IN u(x;t)=X(x)T(t) INTO│──S64
    │ ALGEBRAIC EXPRESSION AND  EQUATION        │
    └──────────────────┬───────────────────────┘
                       │◄──────────────────────────┐
                       ▼                           │
    ┌──────────────────────────────────────────┐  │
    │ SOLVE FOURTH-ORDER ALGEBRAIC EXPRESSION UNDER│──S65
    │ ONE RESTRICTION CONDITION                 │  │
    └──────────────────┬───────────────────────┘  │
         S66           │                           │
           ◄           ▼                     No    │
         ╱─────────────────────────╲──────────────┘
         ╲  MINIMUM SQUARE ERROR    ╱
          ╲     OF EQUATION?       ╱
            ╲───────────┬─────────╱
                        │ Yes
                        ▼
    ┌──────────────────────────────────────────┐
    │    ACQUISITION OF SOLUTION COMPLETED      │──S67
    └──────────────────┬───────────────────────┘
                       │
                       ▼
                ┌─────────────┐
                │     END     │
                └─────────────┘
```

# FIG.10

$o_1(t)$

b1c1 REASONABLE DEFINED AREA S

CYCLICALLY CLOSED CURVE Cpc

$b_1(t)$

# FIG.11

START

INPUT OBJECTIVE FUNCTION L OF HILL EQUATION — S71

ACQUIRE CLOSED CURVE IN REASONABLE AREA WITH b1, c1 BEING CONSTANT — S72

DETERMINE k(t) SO THAT L DOES NOT DEPEND ON t WITH b1(t), c1(t) — S73

DETERMINE ATTRACTOR — S74

S75

DETERMINE ANOTHER ATTRACTOR?    Yes

No

END

**EP 1 808 775 A2**

**REFERENCES CITED IN THE DESCRIPTION**

**Patent documents cited in the description**

• JP 2005009323 A